# EUROPEAN PATENT SPECIFICATION

(11) **EP 2 610 408 B1**
(45) Date of publication and mention of the grant of the patent: **28.08.2019**
(21) Application number: 12182497.3
(22) Date of filing: 31.08.2012
(51) Int. Cl.: E02F 9/20

(54) **Work vehicle**
Nutzfahrzeug
Véhicule de travail

(30) Priority: 26.12.2011 JP 2011283985
(43) Date of publication of application: 03.07.2013
(73) Proprietor: Kubota Corporation, Osaka-shi, Osaka 556-8601 (JP)
(72) Inventor: Kuroshita, Yoshihiko, Sakai-shi, Osaka, 590-0823 (JP); Tanimura, Issei, Sakai-shi, Osako, 590-0823 (JP); Ono, Akiyoshi, Sakai-shi, Osaka, 590-0823 (JP); Shinkai, Atsushi, Sakai-shi, Osaka, 590-0823 (JP)
(74) Representative: Intès, Didier Gérard André

(56) References cited:
- EP-A1- 2 211 042
- EP-A2- 1 914 102
- JP-A- 2009 074 406
- JP-A- 2011 001 896
- US-A1- 2008 319 618

## Description

### [Technical Field]

The present invention relates to a work vehicle having an engine and a hydraulic pump driven by the engine for feeding work oil to a work implement connected to a traveling vehicle body.

### [Background Art]

With the work vehicle described above, the work implement is connected to the traveling vehicle body and the hydraulic pump is connected to e.g. an output shaft of the engine, so that the engine is used as a drive source for the hydraulic pump and the hydraulic pump feeds work oil to the work implement for carrying out a desired work. And, regarding the rotational speed of the engine, a target rotational speed of the engine corresponding to an operation of an accelerator operation section is obtained and the engine rotational speed is controlled to this obtained target rotational speed.

However, since the engine is used as the drive source for the hydraulic pump, merely with controlling the engine rotational speed to a target rotational speed corresponding to an operation of an accelerator operation section, sometimes, it is not possible to obtain a sufficiently high rotational speed for feeding the amount of work oil required for appropriate operation of the work implement, so that an appropriate operation of the work implement may not be possible.

Then, conventionally, from Patent Document 1 (Japanese Unexamined Patent Application Publication No. 9-88650), regarding the engine rotational speed, there is known an arrangement wherein a set rotational speed is provided in advance separately of a target rotational speed and the engine rotational speed is controlled selectively either to the target rotational speed corresponding to an operation of an accelerator operation section or to the set rotational speed.

From Patent Document 2 (Japanese Unexamined Patent Application Publication No. 2000-97056), another work vehicle is known in which there is provided a fuel increasing switch separately of the accelerator operation section, and when this fuel increasing switch is operated, the engine rotational speed is increased from the target rotational speed corresponding to an operation of an accelerator operation section, by an amount of a predetermined rotational speed.

US 2008/0319618 A1 discloses a work vehicle in which an optimized engine speed parameter is determined with regard to fuel consumption, reduced emissions and/or increased productivity. EP 2 221 042 A1 discloses an engine control device for a working vehicle.

However, with the work vehicle disclosed in Patent Document 1 above, in the case of the arrangement being switched to the mode of controlling the engine rotational speed to the target rotational speed corresponding to an operation of an accelerator operation section, it sometimes happens that a sufficiently high rotational speed cannot be obtained as the rotational speed of the hydraulic pump.

Further, with the work vehicle described above, the engine is used not only as the drive source for causing the traveling vehicle body to travel, but also as the drive source for the hydraulic pump. Thus, with consideration of both the target rotational speed for causing the traveling vehicle body to travel and the rotational speed for the hydraulic pump for operating the work implement, the engine rotational speed can be controlled to an appropriate rotational speed. However, with the work vehicle disclosed in Patent Document 1 above, the arrangement simply controls the engine rotational speed to a set rotational speed. Therefore, the arrangement fails to take into account both the target rotational speed and the rotational speed of the hydraulic pump. Hence, it may happen that a sufficiently high rotational speed cannot be obtained as the rotational speed of the hydraulic pump eventually.

In the case of the work vehicle disclosed in Patent Document 2 above, when the fuel increasing switch is operated, the engine rotational speed is increased from the target rotational speed corresponding to an operation of an accelerator operation section, by an amount of a predetermined rotational speed. Hence, a sufficiently high rotational speed can be obtained as the rotational speed of the hydraulic pump. However, even if the target rotational speed is originally a high rotational speed, when the fuel increasing switch is operated, the engine rotational speed is increased from this already high target rotational speed corresponding to an operation of an accelerator operation section, by an amount of a predetermined rotational speed. Accordingly, this gives excessive load to the engine.

The present invention has been made in view of the above and its object is to provide a work vehicle capable of obtaining, as a rotational speed of the hydraulic pump, a high rotational speed as sufficient as possible for feeding work oil required for an operation of the work implement, without giving excessive load to the engine.

### [Summary of the Invention]

A work vehicle according to the present invention comprises:
an engine;
a hydraulic pump driven by the engine for feeding work oil to a work implement connected to a traveling vehicle body;
a target rotational speed calculation section for obtaining a target rotational speed of the engine corresponding to an operation of an accelerator operation section;
a high-speed-rotation rotational speed setting section capable of setting a high-speed-rotation rotational speed for the engine rotational speed;
an engine rotational speed control section for controlling the engine rotational speed; and
a manual operation type, high-speed-rotation instruction operation section for providing a high-speed-rotation instruction for the engine rotational speed;
wherein the engine rotational speed control section effects an accelerator control for controlling the engine rotational speed to the target rotational speed when the high-speed-rotation instruction operation section does not provide the high-speed-rotation instruction, whereas the engine rotational speed control section effects a high-speed-rotation control for controlling the engine rotational speed to whichever higher one of the target rotational speed and the high-speed-rotation rotational speed when the high-speed-rotation rotational speed instruction operation section provides the high-speed-rotation instruction.

When the work implement is to be operated, a high-speed-rotation instruction can be given by the high-speed-rotation instruction operation section by the driver's operating this high-speed-rotation instruction operation section. In the case of issuance of a high-speed-rotation instruction as above, the engine rotational speed control section effects the high-speed-rotation control. Thus, if the target rotational speed is higher than the high-speed-rotation rotational speed, the engine rotational speed is controlled to this target rotational speed. Conversely, if the high-speed-rotation rotational speed is higher than the target rotational speed, the engine rotational speed can be controlled to this high-speed-rotation rotational speed. With this, it is possible to control the engine rotational speed to whichever higher one of the target rotational speed and the high-speed-rotation rotational speed for obtaining a sufficiently high rotational speed, without excessively increasing the engine rotational speed so as not to give excessive load to the engine.

And, when the high-speed-rotation instruction operation section does not provide the high-speed-rotation instruction, the engine rotational speed control section effects the accelerator control, so that the engine rotational speed can be controlled without further increasing the speed from the target rotational speed. With this, it becomes possible not to increase the engine rotational speed more than necessary, thus appropriately preventing application of excessive load to the engine.

Preferably, the work vehicle further comprises a traveling speed changer device capable of speed changing operations in response to an operation of a speed changer section; and
a restraint section for restraining execution of the high-speed-rotation control by the engine rotational speed control section in case the speed range of the speed changer device is switched to a high speed range.

In case the speed changer device has been switched to the high speed range, even if the high-speed-rotation instruction operation section issues the high-speed-rotation instruction, the restraint section restrains execution of the high-speed-rotation control by the engine rotational speed control section, so that the high-speed-rotation control by the engine rotational speed control section is not executed. With this, when the speed changer device is switched to the high speed range, it is possible to prevent the speed of the traveling vehicle body from becoming an excessively high speed with increase in the engine rotational speed, in case the speed changer device has been switched to the high speed range.

With the above-described work vehicle, preferably, in the high-speed-rotation control, the engine rotational speed control section increases the engine rotational speed with setting an increasing speed of the engine rotational speed slower than a set increasing speed.

When the engine rotational speed control section is to effect the high-speed-rotation control, if the increasing speed of increasing the engine rotational speed is high, this tends to invite increase in the emission amount of particulate matters (PM) exhausted from the engine. Then, in executing the high-speed-rotation control, by increasing the engine rotational speed with setting the increasing speed of the engine rotational speed slower than a set increasing speed, the emission amount of the particulate matters (PM) can be restrained to the minimal amount.

With the work vehicle above, preferably, the work vehicle further comprises a vehicle speed hold device for holding the vehicle speed of the traveling vehicle body in case the engine rotational speed control section executes the high-speed-rotation control.

In case the high-speed-rotation rotational speed is higher than the target rotational speed, when the engine rotational speed control section executes the high-speed-rotation control, the engine rotational speed is increased. Hence, in association with this increase, the vehicle speed of the traveling vehicle body too is increased. Then, with provision of the above-described vehicle speed hold device, even when the engine rotational speed is increased with execution of the high-speed-rotation control by the engine rotational speed control section, the vehicle speed of the traveling vehicle body can be maintained and held to the speed prior to the execution of the high-speed-rotation control by the engine rotational speed control section.

With the work vehicle above, preferably, the work vehicle further comprises a hydraulic stepless speed changer device capable of speed change through variable adjustment of a swash plate angle, and the vehicle speed hold device holds the vehicle speed of the traveling vehicle body through control of the swash plate angle of the hydraulic stepless speed changer device.

With the provision of the traveling hydraulic stepless speed changer device capable of speed change through variable adjustment of a swash plate angle, the holding of the vehicle speed of the traveling vehicle body can be appropriately effected through the simple arrangement of controlling the swash plate angle of the hydraulic stepless speed changer device.

With the work vehicle above, preferably, the work implement is a front loader and the vehicle further comprises an operation lever for operating the front loader, the operation lever includes, at its grip portion, a switch as the high-speed-rotation instruction operation section.

The driver can operate the front loader by operating the operation lever. And, since a switch as the high-speed-rotation instruction operation section is provided at the grip portion of this operation lever, the driver can effect a switch operation such as a pressing operation while operating the operation lever. Therefore, the load on the driver can be lessened and at the same time a high-speed-rotation instruction can be given at an appropriate timing.

### [Brief Description of the Drawings]

[Fig. 1] is a schematic view of a tractor,
[Fig. 2] is a schematic view showing power transmission of the tractor,
[Fig. 3] is a control block diagram of the tractor,
[Fig. 4] is a perspective view of an operation lever,
[Fig. 5] is a flowchart showing operations of a main control section and an engine control section, and
[Fig. 6] are graphs showing change in the engine rotational speed, change in the swash plate angle of a hydrostatic stepless speed changer device and changes in the vehicle speed.

### [Description of Embodiments]

Embodiments of a work vehicle relating to the present invention will be described next with reference to the accompanying drawings.

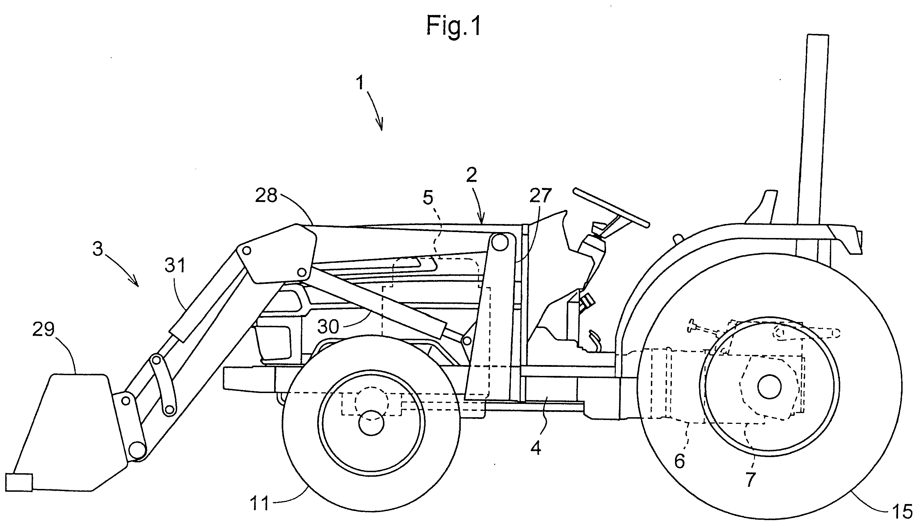

A work vehicle relating to the present invention, as shown in Fig. 1, is embodied e.g. as a tractor and as a work implement, a front loader 3 is connected to a front portion of a traveling vehicle body 2. With this tractor 1 in operation, with use of the front loader 3, such works as excavating earth, conveying and transferring the earth to a desired position such as a truck, are carried out.

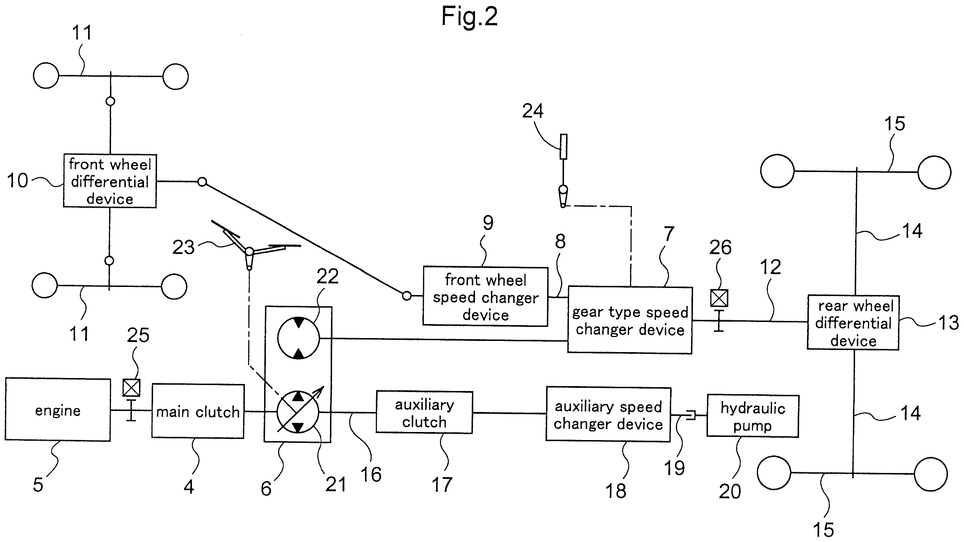

The tractor 1, as shown in Fig. 2, includes, as speed changer devices for speed-changing power of an engine 5 transmitted via a main clutch 4, a hydrostatic stepless speed changer device (HST) 6 (this corresponding to a traveling hydrostatic stepless speed changer device) functioning as a traveling main speed changer device and a gear type speed changer device 7 functioning as a traveling auxiliary speed changer device. Speed-changed power taken off a front wheel output shaft 8 of the gear type speed changer device 7 is transmitted as front wheel drive power to left and right front wheels 11 via a front wheel speed changer device 9, a front wheel differential device 10, etc. Speed-changed power taken off a rear wheel output shaft 12 of the gear type speed changer device 7 is transmitted as rear wheel drive power to left and right rear wheels 15 via a rear wheel differential device 13, left and right rear axles 14, etc. With these, the tractor 1 is configured as a four-wheel drive type wherein the left and right front wheels 11 and rear wheels 15 are driven.

Further, non-speed-changed power from a pump shaft 16 of the hydrostatic stepless speed changer device 6 is transmitted to a power takeoff (PTO) shaft 19 via an auxiliary clutch 17, an auxiliary speed changer device 18, etc., thereby to drive a hydraulic motor 20 for feeding work oil to the front loader 3. In this way, the hydraulic pump 20 for feeding work oil to the front loader 3 is driven by the power from the engine 5 as the power source.

The hydrostatic stepless speed changer device 6 includes a swash plate variable displacement type hydraulic pump 21 receiving the power from the engine 5 and a hydraulic motor 22 rotatably driven by the hydraulic pressure from the hydraulic pump 21 for outputting a power. With this hydrostatic stepless speed changer device 6 in operation, as the power from the engine 5 is inputted to the pump shaft 16, pressure oil is fed from the hydraulic pump 21 to the hydraulic motor 22, so that the hydraulic motor 22 is rotatably driven by the hydraulic pressure from the hydraulic pump 21 to rotate the motor shaft. In the hydrostatic stepless speed changer device 6, in response to an operation of an HST operation section 23 (embodied as e.g. an HST pedal urged to return to its neutral position), change of the swash plate angle of the hydraulic pump 21 is effected. The hydrostatic stepless speed changer device 6 is speed-changed to a forward rotation state, a reverse rotation state or to a neutral state located between the forward rotation state and the reverse rotation state. The hydrostatic stepless speed changer device 6, when speed-changed to either the forward rotation sate or the reverse rotation state, steplessly changes the rotational speed of the hydraulic pump 21 thereby to steplessly change the rotational speed (number of rotations per unit time) of the hydraulic motor 22.

The gear speed changer device 7 is configured to speed-change in steps the power after the speed change operation by the hydrostatic stepless speed changer device 6, in response to an operation of a speed changer operation section 24 (embodied as e.g. a speed changer lever) that can be operated and maintained to/at a plurality of speed positions. In this embodiment, as the speed change range of the gear type speed changer device 7, there are set three speeds of a low speed range, an intermediate speed range and a high speed range. Hence, the device 7 is speed-changed to one of the low speed range, the intermediate range and the high speed range, based on a speed operation position of the speed changer operation section 24.

Further, the tractor 1 includes a rotational speed sensor 25 for detecting an engine rotational speed by detecting a rotational speed of the output shaft from the engine 5 and a vehicle speed sensor 26 for detecting the vehicle speed of the traveling vehicle body 2 by detecting the rotational speed of the rear wheel output shaft 12 of the gear type speed changer device 7.

The front loader 3, as shown in Fig. 1, includes a pair of left and right struts 27 detachably attached to left and right opposed ends of the traveling vehicle body 2, a pair of left and right booms 28 connected to upper ends of the respective struts 27 to be vertically pivotable relative thereto, a bucket 29 connected to free ends of the respective booms 28 to be vertically pivotable relative thereto, a pair of left and right hydraulic boom cylinders 30 for pivotally and vertically pivoting the respective booms 28, and a pair of left and right hydraulic bucket cylinders 31 pivotally and vertically driving the bucket 29.

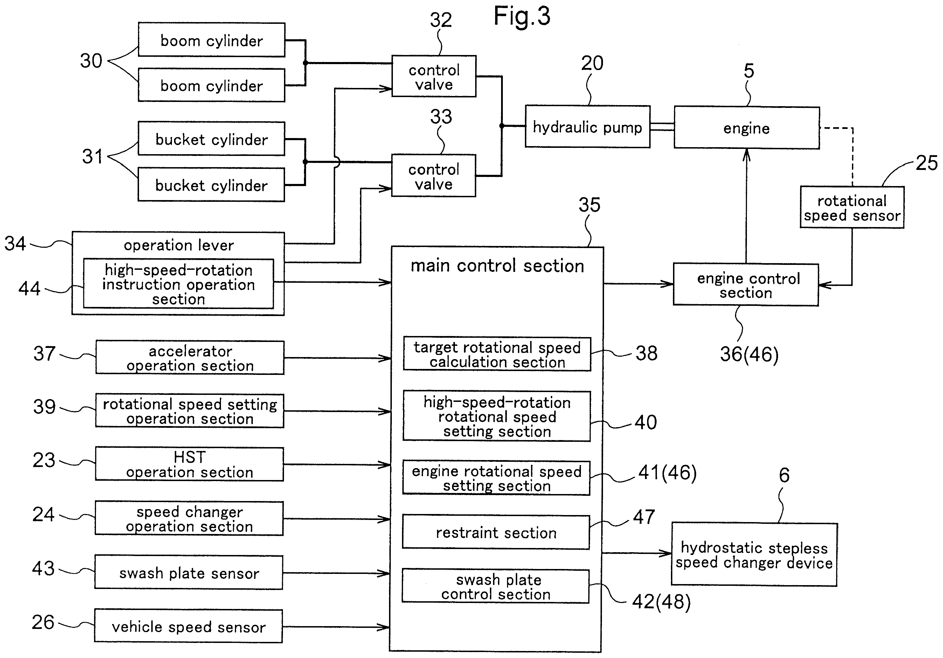

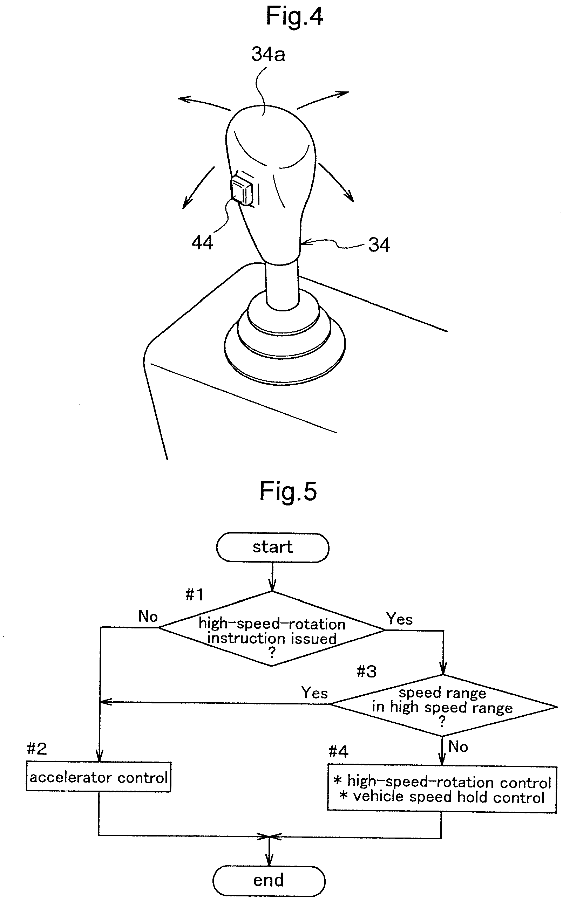

Further, the front loader 3, as shown in Fig. 3, includes a boom control valve 32 for controlling flow of work oil to the left and right boom cylinders 30, a bucket control valve 33 for controlling flow of work oil to the left and right bucket cylinders 31, a cross-pivot type and neutral return type operation lever 32 (see Fig. 4) operably coupled to the boom control valve 32 and the bucket control valve 33, the hydraulic pump 20 for pressure-feeding work oil to the respective control valves 32, 33 with the power from the PTO shaft 19, etc. In this way, the front loader 3 is configured as a hydraulic type wherein the booms 28 and the bucket 29 are vertically pivoted under the flow controls of work oil by the respective control valves 32, 33 operably associated with operations of the operation lever 34.

Referring now to Figs. 3 and 4, the left and right booms 28 are pivoted upwards in response to a downward pivotal operation of the operation lever 34 and are pivoted downwards in response to an upward pivotal operation of the operation lever 34. The bucket 29 is pivoted upwards in response to a leftward pivotal operation of the operation lever 34 and is pivoted downwards in response to a rightward pivotal operation of the operation lever 34. Incidentally, though not shown, the front loader 3 further includes a boom sensor comprised of a rotation type potentiometer for detecting a pivotal angle of the booms 28, a bucket sensor comprised of a rotation type potentiometer for detecting a pivotal angle of the bucket 29, etc.

Further, as shown in Fig. 3, the tractor 1 further includes a main control section 35 for setting an engine rotational speed or controlling a swash plate angle of the hydrostatic stepless speed changer device 6, and an engine control section 36 for controlling the rotational speed of the engine 5 to a control target engine rotational speed set by the main control section 35.

The main control section 35 includes a target rotational speed calculation section 38 for obtaining a target rotational speed of the engine 5 in response to an operation of an accelerator operation section 37, a high-speed-rotation rotational speed setting section 40 for setting a high-speed-rotation rotational speed for the engine rotational speed in response to an operation of a rotational speed setting operation section 39, an engine rotational speed setting section 41 for setting, as a control target engine rotational speed, one of the target rotational speed obtained by the target rotational speed calculation section 38 and the high-speed-rotation rotational speed set by the high-speed-rotation rotational speed setting section 40 and a swash plate control section 42 for controlling a swash plate angle of the hydrostatic stepless speed changer device 6 in correspondence with an operation of an HST control section 23.

The accelerator operation section 37 is capable of varying its operation position within a predetermined operation range and is comprised of e.g. an accelerator pedal or a hand accelerator operation section. Though not shown, detection information of a sensor for detecting an operation position of the accelerator operation section 37 is inputted to the main control section 35. The relationship between the operation positions of the accelerator operation section 37 and the target rotational speeds are set in advance in the form of a map or the like. The target rotational speed calculation section 38 obtains a target rotational speed in correspondence with an operation position of the accelerator operation section 37 with using the preset map.

The rotational speed setting operation section 39 is comprised of e.g. a touch panel type switch provided within a meter disposed forwardly of the driver's seat. In response to an operation of this switch section, the high-speed-rotation rotational speed setting section 40 is capable of variably setting the high-speed-rotation rotational speed to a desired rotational speed. For instance, within the meter, there is provided a display section for displaying a currently set high-speed-rotation rotational speed. If the switch section is held down long, the screen of the display section is switched over to a change setting screen. And, with the display section being switched to the change setting screen, in response to each pressing operation of the switch section, the high-speed-rotation rotational speed is increased by a predetermined amount. For instance, the high-speed-rotation rotational speed can be set with a unit of 200 rpm within the setting range from 800 to 2600 rpm.

The HST operation section 23, as described above, is comprised of an HST pedal which is urged to return to a neutral state. Though not shown, detection information of a sensor for detecting an operation position of the HST operation section 23 is inputted to the main control section 35. Incidentally, the HST operation section 23 is not limited to the HST pedal, but may be operably coupled to an accelerator pedal. The relationship between the operation positions of the HST operation section 23 and the swash plate angles of the hydrostatic stepless speed changer device 6 are set in advance in the form of a map or the like. The swash plate control section 42 obtains a target swash plate angle in correspondence with an operation position of the HST operation section 23 with using the preset map. Based on detection information of a swash plate sensor 43 for detecting a swash plate angle of the hydrostatic stepless speed changer device 6, the swash plate control section 42 controls the swash plate angle of the hydrostatic stepless speed changer device 6 such that the swash plate angle of the hydrostatic stepless speed changer device 6 may become the obtained target swash plate angle.

The engine 5 comprises e.g. a common rail type diesel engine configured to allow electronic control of a fuel injection amount and an injection timing. Upon receipt of an instruction of a control target engine rotational speed set by the engine rotational speed setting section 41, the engine control section 36 controls the fuel injection amount and the injection timing based upon the detection information of the rotational speed sensor 25 such that the rotational speed of the engine 5 may become this set control target engine rotational speed.

As described above, adjacent the driver's seat, there is provided the operation lever 34 for vertically pivoting the booms 28 and the bucket 29 of the front loader 3. This operation lever 34, as shown in Fig. 4, includes a manual operation type high-speed-rotation instruction operation section 44 for providing a high-speed-rotation instruction for the engine rotational speed. This high-speed-rotation instruction operation section 44 is provided at a grip portion 34a of the operation lever 34, and is configured as a momentary type switch which provides a high-speed-rotation instruction only while being pressed by a driver. In this way, since the high-speed-rotation instruction operation section 44 is provided at the grip portion 34a, the driver can operate this high-speed-rotation instruction operation section 44, without removing his/her hand operating the operation lever 34 from this operation lever 34. Incidentally, the high-speed-rotation instruction operation section 44 is not limited to the momentary type switch, but can be an alternating operation type switch or any other various kinds of switch.

Next, with reference to the flowchart in Fig. 5, there will be explained the operation of controlling the engine rotational speed by the main control section 35 and the engine control section 36.

First, the target rotational speed calculation section 38 has obtained a target rotational speed in correspondence with an operation position of the accelerator operation section 37. This calculation of a target rotational speed by the target rotational speed calculation section 38 is repeated constantly. The high-speed-rotation rotational speed setting section 40 sets the highs-speed-rotation rotational speed to a desired rotational speed in response to an operation of the rotational speed setting operation section 39. Once a high-speed-rotation rotational speed being set, the high-speed -rotation rotational speed setting section 40, even if key-OFF operated, will store and hold this high-speed-rotation rotational speed. When key-ON operated again, the high-speed-rotation rotational speed setting section 40 will employ this stored and held high-speed-rotation rotational speed. Further, if the high-speed-rotation rotational speed is changed by an operation of the rotational speed setting operation section 39, the high-speed-rotation setting section 40 will store and hold this changed high-speed-rotation rotational speed.

When the calculation of a target rotational speed by the target rotational speed calculation section 38 and the setting of a high-speed-rotation rotational speed by the high-speed-rotation setting section 40 based on an operation of the rotational speed setting operation section 39 have been effected, in the case of absence of issuance of a high-speed-rotation instruction by the high-speed-rotation instruction operation section 44 (No at step #1), the engine rotational speed setting section 41 sets the target rotational speed obtained by the target rotational speed calculation section 38 to the control target rotational speed. The engine control section 36 will effect an accelerator control for controlling the engine rotational speed to become this control target rotational speed (step #2).

Also, if the high-speed-rotation instruction operation section 44 has issued a high-speed-rotation instruction in response to a driver's operation of the high-speed-rotation instruction operation section 44 (Yes at step #1) AND the speed change of the gear speed changer device 7 is set to a speed range other than the high speed range (No at step #3), the engine rotational speed setting section 41 will set whichever higher one of the target rotational speed obtained by the target rotational speed calculation section 38 and the high-speed-rotation rotational speed set by the high-speed-rotation rotational speed setting section 40 as the control target rotational speed. Then, the engine control section 36 will effect a high-speed-rotation control for controlling the engine rotational speed to become this control target rotational speed (step #4).

More particularly, in the high-speed-control, the engine rotational speed setting section 41 effects comparison between a target rotational speed obtained by the target rotational speed calculation section 38 and a high-speed-rotation rotational speed set by the high-speed-rotation rotational speed setting section 40 and determines which is a higher rotational speed and sets the higher rotational speed as the control target rotational speed. Then, upon setting of a control target rotational speed, the engine rotational speed setting section 41 instructs this control target rotational speed to the engine control section 36, so that the engine control section 36 controls the engine rotational speed to become this control target rotational speed.

The main control section 35 and the engine control section 36 effect the above-described operations of steps #1 through #4 in repetition. And, in the case of cessation of issuance of the high-speed-rotation instruction in the course of execution of the high-speed-rotation control, the high-speed-rotation control will be stopped and the accelerator control will be effected instead. Conversely, the main control section 35 and the engine control section 36 will stop the accelerator control and effect a high-speed-rotation control if a high-speed-rotation instruction has issued in the course of execution of the accelerator control. With this, in case the high-speed-rotation instruction operation section 44 is configured as a momentary type switch, the high-speed-rotation control can be effected only while the driver presses this momentary switch.

As described above, the engine rotational speed control section 46 effects an accelerator control when no high-speed-rotation instruction is issued from the high-speed-rotation instruction operation section 44 and effects a high-speed-rotation control when a high-speed-rotation instruction is issued from the high-speed-rotation instruction operation section 44. The engine rotational speed control section 46 is constituted of the engine rotational speed setting section 41 and the engine control section 36.

Further, as shown in Fig. 3, the speed position of the speed changer operation section 24 is detected by the unillustrated sensor and the detection information of this sensor is inputted to the main control section 35. With this, the main control section 35 can recognize based on the speed position of the speed changer operation section 24 which of the high speed range, the intermediate speed range and the low speed range the speed change of the gear speed changer device 7 is. Then, the main control section 35 includes a restraint section 47 for restraining execution of the high-speed-rotation control by the engine rotational speed control section 46 in case the speed change range of the gear type speed changer device 7 is switched to the high speed range. As shown in Fig. 5, with this restraint section 47 in operation, in case a high-speed-rotation instruction is issued from the high-speed-rotation instruction operation section 44 (Yes at step #1), if the operation position of the speed changer operation section 24 is in the high speed range, the high-speed-rotation control is not effected, but an accelerator control is effected instead. Conversely, if the operation position of the speed changer operation section 24 is other than in the high speed range (No at step #3), the engine rotational speed control section 46 effects the high-speed-rotation control.

As described above, in the case of e.g. a normal traveling operation, when the driver does not operate the high-speed-rotation instruction operation section 44 and no high-speed-rotation instruction is issued from the high-speed-rotation instruction operation section 44, an accelerator control will be effected. With this, the engine rotational speed will be controlled to the target rotational speed corresponding to the operation position of the accelerator operation section 37, whereby the vehicle speed of the traveling vehicle body 2 can be controlled to the vehicle speed corresponding to the operation of the accelerator control section 37. Further, when a work using the front loader 3 is to be carried out, in case the driver has operated the high-speed-rotation instruction operation section 44 to issue a high-speed-rotation instruction, the high-speed-rotation control will be executed after making sure that the speed range of the gear speed changer device 7 is switched to the high speed range. In the high-speed-rotation control, the engine rotational speed is controlled to whichever higher one of the target rotational speed and the high-speed-rotation rotational speed, whereby a sufficiently high rotational speed can be obtained as a rotation speed of the hydraulic pump 20 for feeding work oil to the front loader 3. With this arrangement, it is possible to avoid excessive increase in the engine rotational speed and to prevent occurrence of shortage of work oil to be fed to the front loader 3 and to carry out the work using the front loader 3 appropriately.

In the above, in the high-speed-rotation control, the engine rotational speed control section 46 increases the engine rotational speed with setting an increasing speed of the engine rotational speed slower than a set increasing speed. Regarding the set increasing speed, this is set such that the emission amount of particulate matters (PM) exhausted from the diesel engine will not exceed a set permissible amount. With this, for example, in the high-speed-rotation control, the engine rotational speed control section 46 will increase the engine rotational speed by a set slow increasing speed which is set in advance to be slower than the set increasing speed, thereby to prevent the emission amount of the particulate matters (PM) from exceeding the set permissible amount.

As described above, when the engine rotational speed control section 46 effects the high-speed-rotation control, the engine rotational speed is increased. Hence, it may happen that the vehicle speed of the traveling vehicle body 2 too may increase in association with this increase. Then, as shown in Fig. 3, there is provided a vehicle speed hold device 48 for holding the vehicle speed of the traveling vehicle body 2 when the engine rotational speed control section 46 effects the high-speed-rotation control. This vehicle speed hold device 48 is comprised of a swash plate control section 42. The vehicle speed hold device 48 effects a vehicle speed hold control for holding the vehicle speed of the traveling vehicle body 2 to the speed prior to the execution of the high-speed-rotation control, by controlling the swash plate angle of the hydrostatic stepless speed changer device 6 (step #4 in Fig. 5).

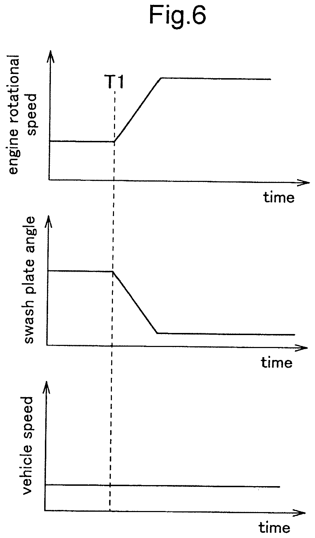

Next, this vehicle speed hold control will be explained with reference to the graphs shown in Fig. 6. In the graphs of Fig. 6, the horizontal axis represents the lapsed time and the vertical axis represents the engine rotational speed in the graph shown in the upper section, whereas the vertical axis represents the swash plate angle of the hydrostatic stepless speed changer device 6 in the graph shown in the middle section and the vertical axis represents the vehicle speed in the graph shown in the lower section, respectively.

The swash plate control section 42 monitors the vehicle speed of the traveling vehicle body 2 based on the detection information of the vehicle speed sensor 26. The swash plate control section 42 controls the swash plate angle of the hydrostatic stepless speed changer device 6 such that when the engine rotational speed control section 46 effects the high-speed-rotation control, the vehicle speed of the traveling vehicle body 2 at the start timing T1 of this high-speed-rotation control may be maintained. That is, when the engine rotational speed control section 46 effects the high-speed-rotation control, the engine rotational speed is increased. Hence, the swash plate control section 42 reduces the swash plate angle of the hydrostatic stepless speed changer device 6 so that the vehicle speed detected by the vehicle speed sensor 26 may be the vehicle speed at the start timing T1 of the high-speed-rotation control. In this way, as the swash plate control section 42 effects a vehicle speed hold control, as shown in the graph shown in the lower section in Fig 6, the vehicle speed of the traveling vehicle body 2 is maintained and held at the vehicle speed of the traveling vehicle body 2 at the start timing T1 of the high-speed-rotation control.

### [Other Embodiments]

(1) In the foregoing embodiment, there is provided the vehicle speed hold device 48 for holding the vehicle speed of the traveling vehicle body 2 when the engine rotational speed control section 46 effects the high-speed-rotation control. Instead of this, for example, the restraint section 47 may be configured to restrain execution of the high-speed-rotation control by the engine rotational speed control section 46 in case the swash plate angle of the hydrostatic stepless speed changer device 6 is controlled to an angle other than the neutral state.
(2) In the foregoing embodiment, it is made possible to variably set the high-speed-rotation rotational speed to a desired rotational speed within the set range. Instead, for example, the high-speed-rotation rotational speed may be a fixed rotational speed of the highest permissible rotational speed of the engine 5.
(3) In the foregoing embodiment, as to the increasing speed in increasing the engine rotational speed in the high-speed-rotation control, the increasing speed may be set slower than a decreasing speed for decreasing the engine rotational speed in the case of e.g. effecting the accelerator control with stopping the operation of the accelerator control section 37 or stopping the high-speed-rotation control.
(4) In the foregoing embodiment, as the speed changer devices, there was disclosed an example wherein the hydrostatic stepless speed changer device (HST) 6 and the gear type speed changer device 7 were provided. The invention is not limited thereto. It is also possible to employ, e.g. an HMT comprised of combination of a hydrostatic stepless speed changer device (HST) and a planetary gear mechanism. Or, any other kinds of speed changer devices may be employed.
(5) In the foregoing embodiment, as an example of a work vehicle, the tractor 1 was disclosed. However, the invention may be applied to any other various kinds of work vehicle.

## Claims

1. A work vehicle (1) comprising:
an engine (5);
a hydraulic pump (20) driven by the engine for feeding work oil to a work implement connected to a traveling vehicle body (2);
a target rotational speed calculation section (38) for obtaining a target rotational speed of the engine corresponding to an operation of an accelerator operation section (37);
a high-speed-rotation rotational speed setting section (40) capable of setting a high-speed-rotation rotational speed for the engine rotational speed;
an engine rotational speed control section (41,46) for controlling the engine rotational speed; and
a manual operation type, high-speed-rotation instruction operation section (44) for providing a high-speed-rotation instruction for the engine rotational speed;
**characterized in that**
the engine rotational speed control section effects an accelerator control for controlling the engine rotational speed to the target rotational speed when the high-speed-rotation instruction operation section (44) does not provide the high-speed-rotation instruction, whereas the engine rotational speed control section effects a high-speed-rotation control for controlling the engine rotational speed to whichever higher one of the target rotational speed and the high-speed-rotation rotational speed when the high-speed-rotation rotational speed instruction operation section provides the high-speed-rotation instruction.

2. The work vehicle (1) according to claim 1, **characterized in that** the work vehicle (1) further comprises:
a traveling speed changer device capable of speed changing operations in response to an operation of a speed changer section (24); and
a restraint section (47) for restraining execution of the high-speed-rotation control by the engine rotational speed control section in case the speed range of the speed changer device is switched to a high speed range.

3. The work vehicle (1) according to claim 1 or 2, **characterized in that** the engine rotational speed control section (41, 46) is configured such that, in the high-speed-rotation control, the engine rotational speed control section (41,46) increases the engine rotational speed with setting an increasing speed of the engine rotational speed slower than a set increasing speed.

4. The work vehicle (1) according to any one of claims 1-3, **characterized in that** the vehicle (1) further comprises a vehicle speed hold device for holding the vehicle speed of the traveling vehicle body (2) in case the engine rotational speed control section (41,46) executes the high-speed-rotation control.

5. The work vehicle (1) according to claim 4, **characterized in that** the work vehicle (1) further comprises:
a hydraulic stepless speed changer device capable of speed change through variable adjustment of a swash plate angle; and
the vehicle speed hold device holds the vehicle speed of the traveling vehicle body (2) through control of the swash plate angle of the hydraulic stepless speed changer device.

6. The work vehicle (1) according to any one of claims 1-4, **characterized in that** the work implement is a front loader (3); and the vehicle (1) further comprises an operation lever (34) for operating the front loader (3), and the operation lever (34) includes, at its grip portion (34a), a switch as the high-speed-rotation instruction operation section (44).

## Patentansprüche

1. Arbeitsfahrzeug (1), umfassend:
einen Motor (5),
eine Hydraulikpumpe (20), die durch den Motor angetrieben wird, um Arbeitsöl einem Arbeitsaufsatz zuzuführen, der mit einer fahrbaren Fahrzeugkarosserie (2) verbunden ist,
eine Zieldrehzahl-Berechnungssektion (38) zum Erhalten einer Zieldrehzahl des Motors entsprechend einer Betätigung einer Beschleunigungs-Betätigungssektion (37),
eine Drehzahl-Einstellungssektion (40) für hohe Drehgeschwindigkeit, die in der Lage ist, eine Drehzahl mit hoher Drehgeschwindigkeit für die Motordrehzahl einzustellen,
eine Motordrehzahl-Steuerungssektion (41, 46) zur Steuerung der Motordrehzahl und
eine Anweisungs-Betätigungssektion (44) vom manuellen Betätigungstyp für hohe Drehgeschwindigkeit, um eine Anweisung für hohe Drehgeschwindigkeit für die Motordrehzahl bereitzustellen,
**dadurch gekennzeichnet, dass**
die Motordrehzahl-Steuerungssektion eine Beschleunigungssteuerung zur Steuerung der Motordrehzahl auf die Zieldrehzahl bewirkt, wenn die Anweisungs-Betätigungssektion (44) für hohe Drehgeschwindigkeit die Anweisung für hohe Drehgeschwindigkeit nicht bereitstellt, während die Motordrehzahl-Steuerungssektion eine Steuerung für hohe Drehgeschwindigkeit zur Steuerung der Motordrehzahl auf die jeweils höhere von der Zieldrehzahl und der Drehzahl für hohe Drehgeschwindigkeit bewirkt, wenn die Anweisungs-Betätigungssektion für hohe Drehgeschwindigkeit die Anweisung für hohe Drehgeschwindigkeit bereitstellt.

2. Arbeitsfahrzeug (1) nach Anspruch 1, **dadurch gekennzeichnet, dass** das Arbeitsfahrzeug (1) ferner umfasst:
eine Fahrtgeschwindigkeits-Änderungsvorrichtung, die zu Geschwindigkeitsänderungs-Betätigungen in Reaktion auf eine Betätigung einer Geschwindigkeits-Änderungssektion (24) in der Lage ist, und
eine Beschränkungssektion (47) zur Beschränkung der Ausführung der Steuerung für hohe Drehgeschwindigkeit durch die Motordrehzahl-Steuerungssektion, falls der Geschwindigkeitsbereich der Geschwindigkeits-Änderungsvorrichtung in einen Hochgeschwindigkeitsbereich geschaltet ist.

3. Arbeitsfahrzeug (1) nach Anspruch 1 oder 2, **dadurch gekennzeichnet, dass** die Motordrehzahl-Steuerungssektion (41, 46) so ausgestaltet ist, dass in der Steuerung für hohe Drehgeschwindigkeit die Motordrehzahl-Steuerungssektion (41, 46) die Motordrehzahl erhöht, indem sie eine zunehmende Motordrehzahl einstellt, die niedriger als eine eingestellte zunehmende Geschwindigkeit ist.

4. Arbeitsfahrzeug (1) nach einem der Ansprüche 1 bis 3, **dadurch gekennzeichnet, dass** das Fahrzeug (1) ferner eine Fahrzeuggeschwindigkeits-Haltevorrichtung umfasst, um die Fahrzeuggeschwindigkeit der fahrenden Fahrzeugkarosserie (2) zu halten, falls die Motordrehzahl-Steuerungssektion (41, 46) die Steuerung für hohe Drehgeschwindigkeit ausführt.

5. Arbeitsfahrzeug (1) nach Anspruch 4, **dadurch gekennzeichnet, dass** das Arbeitsfahrzeug (1) ferner umfasst:
eine stufenlose hydraulische Drehzahländerungsvorrichtung, die zur Drehzahländerung durch variable Einstellung eines Schrägscheibenwinkels in der Lage ist, wobei
die Fahrzeuggeschwindigkeits-Haltevorrichtung die Fahrzeuggeschwindigkeit der fahrenden Fahrzeugkarosserie (2) durch Steuerung des Schrägscheibenwinkels der stufenlosen hydraulischen Drehzahländerungsvorrichtung hält.

6. Arbeitsfahrzeug (1) nach einem der Ansprüche 1 - 4,
**dadurch gekennzeichnet, dass** der Arbeitsaufsatz ein Frontlader (3) ist und das Fahrzeug (1) ferner einen Betätigungshebel (34) zum Betätigen des Frontladers (3) umfasst, wobei der Betätigungshebel (34) an seinem Griffabschnitt (34a) einen Schalter als die Anweisungs-Betätigungssektion (44) für hohe Drehgeschwindigkeit beinhaltet.

## Revendications

1. Véhicule de travail (1) comprenant :
un moteur (5) ;
une pompe hydraulique (20) entraînée par le moteur pour fournir de l'huile de travail à un accessoire de travail raccordé à une carrosserie de véhicule mobile (2) ;
une section de calcul de vitesse de rotation cible (38) pour obtenir une vitesse de rotation cible du moteur correspondant à un actionnement d'une section d'actionnement d'accélérateur (37) ;
une section de réglage de vitesse de rotation à rotation de vitesse élevée (40) capable de régie une vitesse de rotation à rotation à vitesse élevée pour la vitesse de rotation du moteur ;
une section de commande de vitesse de rotation de moteur (41, 46) pour commander la vitesse de rotation du moteur ; et
une section de commande d'instruction de rotation à vitesse élevée, du type à actionnement manuel (44), pour fournir une instruction de rotation à vitesse élevée pour la vitesse de rotation du moteur ;
**caractérisé en ce que** :
la section de commande de vitesse de rotation de moteur effectue une commande d'accélérateur pour commander la vitesse de rotation de moteur par rapport à une vitesse de rotation cible lorsque la section de commande d'instruction de rotation à vitesse élevée (44) ne fournit pas l'instruction de rotation à vitesse élevée, tandis que la section de commande de vitesse de rotation de moteur effectue une commande de rotation à vitesse élevée pour commander la vitesse de rotation du moteur quelle que soit la vitesse plus élevée parmi la vitesse de rotation cible et la vitesse de rotation à rotation de vitesse élevée lorsque la section de commande d'instruction de vitesse de rotation à rotation de vitesse élevée fournit l'instruction de rotation à vitesse élevée.

2. Véhicule de travail (1) selon la revendication 1, **caractérisé en ce que** le véhicule de travail (1) comprend en outre :
un dispositif de changement de vitesse de déplacement pouvant réaliser des opérations de changement de vitesse en réponse à un actionnement d'une section de changement de vitesse (24) ; et
une section de retenue (47) pour restreindre l'exécution de la commande de rotation à vitesse élevée par la section de commande de vitesse de rotation de moteur dans le cas dans lequel la plage de vitesse du dispositif de changement de vitesse est commutée sur une plage de vitesse élevée.

3. Véhicule de travail (1) selon la revendication 1 ou 2, **caractérisé en ce que** la section de commande de vitesse de rotation de moteur (41, 46) est configurée de sorte que, dans la commande de rotation à vitesse élevée, la section de commande de vitesse de rotation de moteur (41, 46) augmente la vitesse de rotation de moteur lors du réglage d'une vitesse croissante de la vitesse de rotation de moteur plus lente qu'une vitesse croissante de consigne.

4. Véhicule de travail (1) selon l'une quelconque des revendications 1 à 3, **caractérisé en ce que** le véhicule (1) comprend en outre un dispositif de maintien de vitesse de véhicule pour maintenir la vitesse de véhicule de la carrosserie de véhicule mobile (2) dans le cas dans lequel la section de commande de vitesse de rotation de moteur (41, 46) exécute la commande de rotation à vitesse élevée.

5. Véhicule de travail (1) selon la revendication 4, **caractérisé en ce que** le véhicule de travail (1) comprend en outre :
un dispositif de changement de vitesse hydraulique à variation continue capable de changement de vitesse par le biais d'un ajustement variable d'un angle de plateau oscillant ; et
le dispositif de maintien de vitesse de véhicule maintient la vitesse de véhicule de la carrosserie de véhicule mobile (2) par le biais de la commande de l'angle de plateau oscillant du dispositif de changement de vitesse hydraulique à variation continue.

6. Véhicule de travail (1) selon l'une quelconque des revendications 1 à 4, **caractérisé en ce que** l'accessoire de travail est un chargeur avant (3) ; et le véhicule (1) comprend en outre un levier de commande (34) pour actionner le chargeur avant (3), et le levier de commande (34) comprend, au niveau de sa partie de préhension (34a), un commutateur en tant que section de commande d'instruction de rotation à vitesse élevée (44).
